# DEMANDE DE BREVET EUROPEEN

(11) **EP 4 092 365 A1**
(43) Date de publication de la demande: **23.11.2022**
(21) Numéro de dépôt: 22167987.1
(22) Date de dépôt: 12.04.2022
(51) Int. Cl.: F25J 3/04, F25J 3/02

(54) **ENCEINTE DE COLONNE DE DISTILLATION ET MÉTHODE DE TRANSPORTATION D'UNE COLONNE DE DISTILLATION**

(30) Priorité: 19.05.2021 FR 2105206
(71) Demandeur: L'Air Liquide, société anonyme pour l'Étude et l'Exploitation des procédés Georges Claude, 75007 Paris (FR)
(72) Inventeur: KURTZ, Remy, 94503 CHAMPIGNY SUR MARNE (FR); FAVRE, Arnaud, 94503 CHAMPIGNY SUR MARNE (FR)
(74) Mandataire: Air Liquide

(57) **Abrégé**

Une enceinte contenant une colonne de distillation, la dernière est constituée par une virole cylindrique (K) contenant des éléments de transfert de masse et de chaleur, fermée à une extrémité par une calotte et à l'autre extrémité par une cuve bombée (E) et une jupe (J) de forme cylindrique, ayant le même diamètre que la virole et alignée co-axialement avec la virole, fixée à une extrémité de la virole pour entourer la cuve bombée, formant un espace (I) entre la cuve, les parois de la jupe et un fond (F), la jupe comprenant au moins une ouverture (O1, O2) pour permettre le passage d'un gaz de balayage.

## Description

La présente invention est relative à une enceinte de colonne de distillation et à une méthode de transportation d'une colonne de distillation. Les colonnes de distillation opérant à des températures en dessous de 0°C doivent être isolées thermiquement pour réduire les pertes thermiques. En général elles sont disposées dans une enceinte parallélépipédique ou cylindrique, remplie d'isolant thermique. Une colonne de distillation est constituée par une virole cylindrique contenant des éléments de transfert de masse et de chaleur, par exemple des garnissages structurés ou des plateaux de distillation ;

Comme l'isolant devant remplir l'enceinte a un certain poids et doit être maintenu au sec, il est généralement déversé dans l'enceinte, une fois la colonne installée sur son site définitif où elle doit fonctionner pour distiller un mélange gazeux.

Pour des colonnes relativement légères, une structure en dessous d'une colonne peut la maintenir en place.

Pour des colonnes plus lourdes, une autre solution est nécessaire.

La colonne a une forme généralement cylindrique avec une cuve bombée et son maintien à la verticale est assurée, dans le cas des colonnes plus lourdes, par exemple celles en acier inoxydable, par un élément cylindrique appelé « jupe ». Cette jupe est de même diamètre que la colonne et alignée coaxialement avec la virole; elle est fixée à la virole de la colonne. Ainsi un espace fermé et vide est situé directement en dessous de la colonne entre la cuve bombée et la surface plate sur laquelle la colonne est fixée.

Cette surface plate peut être le fond de l'enceinte ou sinon un autre fond correspondant à une plaque disposée sur le fond de l'enceinte.

Il est important que cet espace fermé et vide soit isolé pour ne pas laisser des espaces sans isolation.

L'invention consiste à prévoir au moins une ouverture dans la jupe pour permettre à l'azote de balayage de pénétrer dans l'espace entre la jupe et la cuve bombée de la colonne et/ou pour permettre d'introduire de l'isolant pulvérulent dans l'espace entre la jupe et la cuve bombée de la colonne.

Selon l'art antérieur, le gaz de balayage était relâché dans la perlite autour de la colonne mais n'était pas introduit dans cet espace, ce qui posait des problèmes de sécurité graves en cas de fuite de fluide de la colonne dans l'espace. US3750413 montre une colonne de distillation ayant une cuve bombée et une jupe cylindrique, la jupe étant traversée par une conduite relier à l'intérieur de la colonne à travers la cuve bombée pour y introduire ou soutirer un fluide.

L'azote de balayage ne circule qu'à l'extérieur de la colonne et ne participe pas à la distillation.

Selon un objet de l'invention, il est prévu une enceinte de forme parallélépipédique ou cylindrique contenant une colonne de distillation constituée par une virole cylindrique contenant des éléments de transfert de masse et de chaleur, fermée à une extrémité par une calotte et à l'autre extrémité par une cuve bombée (E) et une jupe (J) de forme cylindrique, ayant le même diamètre que la virole et alignée coaxialement avec la virole, fixée à une extrémité de la virole pour entourer la cuve bombée, formant un espace (I) entre la cuve, les parois de la jupe et un fond et comprenant des moyens pour relâcher un gaz de balayage à l'intérieur de l'enceinte mais à l'extérieur de l'espace caractérisée en ce que la jupe comprend au moins une ouverture, de préférence au moins deux ouvertures, pour permettre la circulation du gaz de balayage dans l'espace (I), l'espace étant rempli d'isolant thermique pulvérulent.

De préférence :
- la jupe comprend des moyens pour fermer l'au moins une ouverture.
- l'espace est rempli de perlite.
- l'espace ne contient pas de garnissages ou de plateaux.
- au moins deux ouvertures dans la virole sont l'une en face de l'autre.
- l'enceinte contient de l'isolant thermique pulvérulent uniquement dans l'espace.
- l'enceinte de l'isolant thermique pulvérulent dans un espace entre l'enceinte et la colonne.
- la jupe comprend deux ouvertures , de préférence l'une en face de l'autre, pour permettre au gaz de balayage de circuler à travers l'espace.

Selon un autre objet de l'invention, il est prévu une méthode de transportation d'une colonne de distillation dans laquelle :
i) A un premier site, une colonne de distillation constituée par une virole cylindrique contenant des éléments de transfert de masse et de chaleur, fermée à une extrémité par une calotte et à l'autre extrémité par une cuve bombée et une jupe de forme cylindrique, ayant le même diamètre que la virole et alignée coaxialement avec la virole, fixée à une extrémité de la virole pour entourer la cuve bombée, formant un espace entre la cuve, les parois de la jupe et un fond, la jupe comprenant au moins une ouverture (O1, O2), de préférence au moins deux ouvertures, capable(s) permettre la circulation d'un gaz de balayage dans l'espace, est assemblée en disposant de l'isolant dans l'espace,
ii) La colonne est transportée à une deuxième site éventuellement à l'intérieur d'une enceinte de forme parallélépipédique ou cylindrique
iii) Une fois arrivée au deuxième site, la colonne est positionnée avec son axe à la verticale et placée dans une enceinte, si elle n'est pas transportée dans l'enceinte et un espace de l'enceinte autour de la colonne est remplie au deuxième site d'isolant thermique pulvérulent.

Selon d'autres aspects facultatifs :
- les moyens pour fermer l'au moins une ouverture sont fermés au premier site et une fois arrivée au deuxième site les moyens pour fermer au moins une ouverture sont ouverts ou enlevés de sorte qu'au moins une ouverture est ouverte.
- au moins une zone de l'intérieur de l'enceinte (CB) est isolée avec de la laine de roche.
- l'espace ne contient pas de liquide, en l'usage.
- l'au moins une ouverture n'est pas traversée par un tuyau.
- l'au moins une ouverture est dimensionnée pour permettre d'introduire de l'isolant thermique pulvérulent dans l'espace.

Ainsi l'opération complexe d'isoler l'espace en dessous de la virole est effectuée sur un site où, par exemple, des ouvriers plus expérimentés sont présents et le remplissage en vrac est effectué sur un autre site, où des ouvriers moins qualifiés sont présents.

De préférence, les moyens pour fermer l'au moins une ouverture sont fermés au premier site et, une fois arrivée au deuxième site, les moyens pour fermer au moins une ouverture sont ouverts ou enlevés de sorte qu'au moins une ouverture est ouverte.

Au moins une zone de l'intérieur de l'enceinte peut être isolée avec de la laine de roche.

Selon un autre objet de l'invention, il est prévu une méthode de remplir une enceinte d'isolant pulvérulent, l'enceinte contenant une colonne de distillation constituée par une virole cylindrique contenant des éléments de transfert de masse et de chaleur, fermée à une extrémité par une calotte et à l'autre extrémité par une cuve bombée et une jupe de forme cylindrique, ayant le même diamètre que la virole et alignée coaxialement avec la virole, fixée à une extrémité de la virole pour entourer la cuve bombée, formant un espace entre la cuve, les parois de la jupe et un fond, la jupe comprenant au moins une ouverture, de préférence au moins deux ouvertures dans laquelle l'isolant pulvérulent est déversée dans l'enceinte à travers une ouverture dans l'enceinte et pénètre dans l'espace à travers au moins une ouverture.

L'invention sera décrite de manière plus détaillée en se référant aux figures.
[FIG.1] représente une colonne selon l'invention.
[FIG.2] représente la colonne de la [FIG.1] disposée à l'intérieur d'une enceinte.

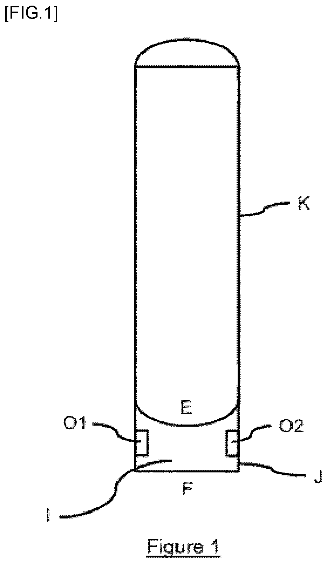

[FIG.1] représente une colonne de distillation constituée par une virole cylindrique K contenant des éléments de transfert de masse et de chaleur, par exemple des garnissages structurés ou des plateaux de distillation. La colonne est fermée à une extrémité par une calotte et à l'autre extrémité par une cuve bombée E. Une jupe J de forme cylindrique, ayant le même diamètre que la virole K et alignée coaxialement avec la virole, est fixée à une extrémité de la colonne pour entourer la cuve bombée E, formant un espace I entre la cuve, les parois de la jupe et le fond F. La jupe J est fixée au fond plat de manière étanche, par exemple en la soudant en place. Sinon une bride annulaire autour de la jupe J peut être fixée au fond comme décrit dans FR2775438.

Au moins une ouverture, de préférence au moins deux ouvertures O1, O2 sont percées dans la jupe J et peuvent être fermées en utilisant des moyens de fermeture tels qu'un bouchon comprenant une couche d'isolant telle que de la laine de roche. Ces ouvertures ne sont pas encombrées par le passage d'un tuyau ou d'un autre élément de sorte que l'isolant pulvérulent puisse être introduit dans l'espace. Les ouvertures permettent également à un gaz de balayage circulant à l'extérieur de la colonne et de la jupe de pénétrer dans l'espace I en dessous de la cuve bombée E. L'espace formé I est rempli d'isolant thermique pulvérulent I, par exemple de la perlite. De préférence, l'isolant est introduit dans l'espace en l'envoyant par au moins une des ouvertures O1, O2. L'espace I ne contient ni garnissages ni plateaux. Il peut par exemple contenir au moins un tuyau et/ou au moins une vanne. Comme la jupe J est fixée de manière étanche au fond et les ouvertures O1, O2 sont bien fermées, l'isolant reste dans l'espace.

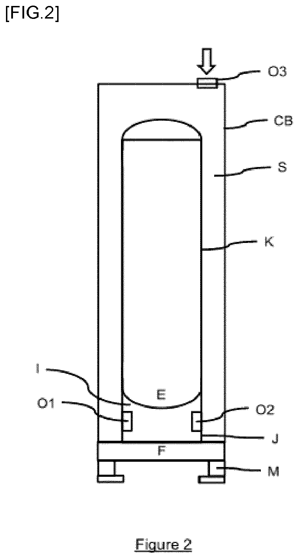

[FIG.2] illustre que pour servir comme colonne de distillation à une température inférieure à 0°C, la colonne doit être disposée dans une enceinte fermée parallélépipédique ou cylindrique CB, remplie d'isolant thermique, par exemple de l'isolant thermique pulvérulent.

Selon l'invention, dans un premier temps, seul l'espace entre la jupe J et la cuve E de la colonne est rempli d'isolant et ce remplissage a lieu de préférence dans l'atelier d'assemblage et/ou de fabrication. Ensuite la colonne peut être transportée à l'intérieur de l'enceinte CB ou sinon disposée dans l'enceinte CB une fois arrivée sur le site définitif où elle doit fonctionner. Ainsi dans le cas où la colonne est transportée dans l'enceinte CB, celle-ci ne contient pas d'isolant à part celui installé entre la jupe J et la cuve bombée E de la colonne. Dans ce cas, donc l'espace S entre la virole K, la jupe J et l'enceinte qui les entoure contient de l'air et n'est pas rempli d'isolant.

Une fois arrivée sur site et, le cas échéant, disposée dans l'enceinte CB, les moyens de fermeture d'au moins une ouverture O1, O2 sont enlevés et l'enceinte est remplie d'isolant thermique pulvérulent, sachant qu'au moins une zone à l'intérieur de l'enceinte CB peut également contenir de la laine de roche comme isolant.

Ce remplissage est fait en déversant de l'isolant pulvérulent par une ouverture O3 par exemple dans le toit de l'enceinte CB.

Quand la colonne est en fonctionnement, l'intérieur de l'enceinte CB est balayé en permanence par de l'azote sec, ainsi permettant d'évacuer des fuites vers le toit de l'enceinte CB de manière connue. Le fait d'avoir ouvert au moins une ouverture O1, O2 dans la jupe J de la colonne permet à ce gaz de balayage de pénétrer dans l'espace I et de balayer l'isolant qu'il contient. Ceci permet d'évacuer de l'eau qui pourrait être présente dans l'espace I si l'isolant était humide. Si l'eau venait à geler, ceci pourrait fragiliser la jupe J et/ou la cuve E. Evidemment l'usage d'au moins deux ouvertures O1, O2 permet une meilleure circulation de gaz de balayage à l'intérieur de la jupe J. Si deux des ouvertures O1, O2 sont en face l'une de l'autre, ceci favorise une bonne circulation.

La présence d'au moins une ouverture permet d'introduire de l'isolant pulvérulent à l'intérieur de la jupe pour remplir complètement ou partiellement l'espace. L'isolant pourrait par exemple se tasser pendant le voyage, de sorte que des espaces se sont se crées en dessous de la cuve.

Le fait d'avoir pré rempli l'isolant thermique à l'intérieur de la jupe permet une meilleure répartition de l'isolant qui est introduit habituellement par le toit de l'enceinte, une fois arrivée sur place. En effet il est difficile d'assurer une bonne répartition d'isolant dans l'espace I en dessous de la cuve bombée E, en particulier dans les zones de jonction entre la jupe J et la cuve bombée E.

## Revendications

1. Enceinte (CB) de forme parallélépipédique ou cylindrique contenant une colonne de distillation constituée par une virole cylindrique (K) contenant des éléments de transfert de masse et de chaleur, fermée à une extrémité par une calotte et à l'autre extrémité par une cuve bombée (E) et une jupe (J) de forme cylindrique, ayant le même diamètre que la virole et alignée coaxialement avec la virole, fixée à une extrémité de la virole pour entourer la cuve bombée, formant un espace (I) entre la cuve, les parois de la jupe et un fond (F) et comprenant des moyens pour relâcher un gaz de balayage à l'intérieur de l'enceinte mais à l'extérieur de l'espace **caractérisée en ce que** la jupe comprend au moins une ouverture (O1, O2), de préférence au moins deux ouvertures, pour permettre la circulation du gaz de balayage dans l'espace (I), l'espace étant rempli d'isolant thermique pulvérulent.

2. Enceinte selon la revendication 1 dans laquelle la jupe (J) comprend des moyens pour fermer l'au moins une ouverture (O1, O2).

3. Enceinte selon la revendication 1 ou 2 dans laquelle l'espace (I) est rempli de perlite.

4. Enceinte selon l'une des revendications précédentes dans laquelle l'espace (I) ne contient pas de garnissages ou de plateaux.

5. Enceinte selon l'une des revendications précédentes dans laquelle au moins deux ouvertures (O1, O2) dans la virole sont l'une en face de l'autre.

6. Enceinte (CB) selon l'une des revendications précédentes contenant de l'isolant thermique pulvérulent uniquement dans l'espace (I).

7. Enceinte (CB) selon l'une des revendications précédentes 1 à 5 contenant de l'isolant thermique pulvérulent dans un espace entre l'enceinte et la colonne.

8. Enceinte (CB) selon l'une des revendications précédentes dans laquelle que la jupe comprend deux ouverture (O1, O2), l'une en face de l'autre, pour permettre au gaz de balayage de circuler à travers l'espace (I). Méthode de transportation d'une colonne de distillation dans laquelle
i) A un premier site, une colonne de distillation constituée par une virole cylindrique (K) contenant des éléments de transfert de masse et de chaleur, fermée à une extrémité par une calotte et à l'autre extrémité par une cuve bombée (E) et une jupe (J) de forme cylindrique, ayant le même diamètre que la virole et alignée coaxialement avec la virole, fixée à une extrémité de la virole pour entourer la cuve bombée, formant un espace (I) entre la cuve, les parois de la jupe et un fond (F), la jupe comprenant au moins une ouverture (O1, O2), de préférence au moins deux ouvertures, capable(s) permettre la circulation d'un gaz de balayage dans l'espace (I), est assemblée en disposant de l'isolant dans l'espace (I),
ii) La colonne est transportée à une deuxième site éventuellement à l'intérieur d'une enceinte (CB) de forme parallélépipédique ou cylindrique,
iii) Une fois arrivée au deuxième site, la colonne est positionnée avec son axe à la verticale et placée dans une enceinte, si elle n'est pas transportée dans l'enceinte et un espace de l'enceinte autour de la colonne est remplie au deuxième site d'isolant thermique pulvérulent.

9. Méthode selon la revendication 8 dans laquelle la colonne est selon la revendication 2 et les moyens pour fermer l'au moins une ouverture (O1, O2) sont fermés au premier site et une fois arrivée au deuxième site les moyens pour fermer au moins une ouverture sont ouverts ou enlevés de sorte qu'au moins une ouverture est ouverte.

10. Méthode selon l'une des revendications 8 et 9 dans laquelle au moins une zone de l'intérieur de l'enceinte (CB) est isolée avec de la laine de roche.
